# DEMANDE DE BREVET EUROPEEN

(11) **EP 0 566 453 A1**
(43) Date de publication de la demande: **20.10.1993**
(21) Numéro de dépôt: 93400919.2
(22) Date de dépôt: 08.04.1993
(51) Int. Cl.: E05B 67/36, E05B 17/14, F16B 21/16

(54) **Cadenas étanche**

(30) Priorité: 13.04.1992 FR 9204493
(71) Demandeur: Carreras, Jacques, F-94350 Villiers-Sur-Marne (FR)
(72) Inventeur: Carreras, Jacques, F-94350 Villiers-Sur-Marne (FR)
(74) Mandataire: Martin, Jean-Jacques

(57) **Abrégé**

La présente invention concerne un cadenas. Ce cadenas comporte un organe femelle (2), présentant un trou borgne (6) bordé d'un épaulement (13), et un organe mâle (1) indépendant de l'organe femelle (2) et présentant de façon solidaire une tige (20) bordée d'un épaulement (28). La tige (20) peut être verrouillée à volonté dans le trou borgne (6), au moyen d'une serrure (55) dans une position relative dans laquelle les deux épaulements (13 et 28) définissent entre eux un espace (29) de réception d'un anneau ou de plusieurs anneaux juxtaposés (3, 4) à assembler. Des moyens (62, 93) assurent une étanchéité entre l'organe mâle (1) et l'organe femelle (2), intrinsèquement étanches, au niveau de la tige (20) et du trou borgne (6), ainsi qu'autour de la serrure (55).

Il est ainsi possible de réaliser, sous un encombrement et un poids réduits, des cadenas offrant une résistance mécanique accrue et une étanchéité permettant de les utiliser en ambiance humide ou en immersion.

## Description

La présente invention concerne un cadenas, du type comportant deux organes mutuellement indépendants, à raison :
- d'un organe femelle présentant un axe longitudinal et un trou borgne longitudinal bordé d'un épaulement transversal, et
- d'un organe mâle présentant un axe longitudinal et une tige longitudinale bordée d'un épaulement transversal, la tige étant susceptible de pénétrer coaxialement dans le trou borgne jusqu'à une position déterminée dans laquelle les épaulements se font face mutuellement en étant mutuellement écartés longitudinalement pour définir entre eux un espace, autour de la tige, ou de se dégager du trou borgne, lesdits organes mâle et femelle présentant des

moyens de verrouillage, à volonté, de la tige dans l'évidement lorsque la tige occupe ladite position, à raison d'au moins une saillie transversale, escamotable portée par un premier desdits organes et d'au moins une gorge transversale aménagée dans le second desdits organes, dans des positions respectives situées à l'intérieur du trou borgne lorsque la tige occupe ladite position et telles que la saillie puisse alors pénétrer dans la gorge pour verrouiller la tige dans le trou borgne, le premier organe logeant un mécanisme d'escamotage de ladite saillie à volonté, présentant une serrure accessible lorsque la tige occupe ladite position.

Les cadenas de ce type, décrits par exemple dans la demande de brevet français N° 86 12775 du 12 Septembre 1986, présentent une sécurité considérablement accrue, à volume et poids comparables, par rapport aux cadenas antérieurement connus, comportant un corps sur lequel est articulé un arceau susceptible d'être immobilisé à volonté, par rapport au corps, dans une position dans laquelle il se ferme sur ce dernier.

Cette sécurité accrue s'exprime d'une part en termes de moindre vulnérabilité aux tentatives d'effraction et d'autre part en termes de meilleure résistance mécanique, ce qui a permis d'utiliser des cadenas de ce type comme moyens d'assemblage mécanique, résistant notamment à la traction, entre des dispositifs soumis à des efforts antagonistes et par exemple entre deux chaînes de levage, de traction ou d'amarrage.

Notamment, mais non exclusivement, dans de telles applications, il est apparu que les cadenas de ce type présentaient un inconvénient en ce que, s'ils étaient amenés à être exposés à l'humidité, voire à être immergés au moins temporairement dans l'eau, de l'eau pouvait y pénétrer au risque d'endommager le mécanisme d'escamotage à serrure, au point d'empêcher ensuite l'ouverture du cadenas.

Le problème se pose depuis longtemps d'étanchéifier les cadenas, mais ceci semblait à peu près exclu avec les cadenas de l'Art antérieur, en particulier au niveau de la jonction entre le corps et l'arceau articulé.

Il est apparu que ce problème pouvait être par contre résolu avec un cadenas du type indiqué en préambule, dont les parties mâle et femelle peuvent être aisément réalisées de façon à n'offrir d'accès à l'eau qu'à deux niveaux, à savoir :
- au niveau de l'accès à la serrure, cependant relativement facile à étanchéifier, et
- au niveau de la pénétration de la tige de l'organe mâle dans le trou borgne de l'organe femelle, ouvrant accès au mécanisme d'escamotage à serrure par l'intermédiaire du passage nécessairement prévu pour la saillie escamotable de verrouillage de la tige dans le trou borgne, une étanchéité à ce niveau étant plus difficile à réaliser pour être à la fois efficace, dans des conditions convenables de répétitivité et de tenue à des pressions éventuellement élevées, dues par exemple à une immersion à grande profondeurdans la mer, et compatible avec une ouverture et une fermeture du cadenas dans les meilleures conditions de facilité, d'une part, et de préservation des moyens utilisés pour l'étanchéité, d'autre part.

Pour résoudre ce problème, la présente invention propose un cadenas du type indiqué en préambule, caractérisé en ce que la tige et le trou borgne présentent un filetage longitudinal, coaxial, respectif, les filetages étant mutuellement complémentaires et en prise mutuelle lorsque la tige occupe ladite position et des positions longitudinalement proches de celle-ci, ainsi qu'une portée annulaire, transversale respective d'étanchéité, de révolution autour de l'axe longitudinal respectif, pour un joint annulaire d'étanchéité, élastiquement compressible au moins longitudinalement, les portées d'étanchéité occupant des positions respectives situées du même côté de la saillie et de la gorge que les épaulements lorsque la tige occupe ladite position et telles que les portées d'étanchéité se fassent alors face mutuellement en étant mutuellement espacées longitudinalement d'une distance telle que le joint soit élastiquement comprimé longitudinalement entre elles, en ce que sont prévus des moyens amovibles d'obturation étanche de la serrure et en ce que les organes mâle et femelle enferment par ailleurs de façon étanche le mécanisme d'escamotage, y compris la serrure.

Une telle structure offre, grâce à la présence des filetages mutuellement complémentaires prévus respectivement sur la tige et dans le trou borgne, la possibilité d'appliquer au joint annulaire, par exemple constitué d'un joint torique, une compression longitudinale de toute valeur déterminée, même élevée, propre à procurer l'étanchéité recherchée même vis-à-vis de pressions particulièrement élevées, lorsque la tige occupe ladite position déterminée constituant la position limite d'insertion dans le trou borgne, avant d'immobiliser les organes mâle et femelle l'un par rapport à l'autre en engageant la saillie escamotable de l'un dans la gorge de l'autre, la mise en compression du joint étant ainsi dissociée de l'immobilisation mutuelle des organes mâle et femelle. La valeur de la compression longitudinale du joint, obtenue parvissa- ge mutuel de l'organe mâle et de l'organe femelle, peut même être telle que la réaction élastique qui en résulte dans le joint s'opposerait, en l'absence des filetages, à ce que l'on puisse amener la tige de l'organe mâle dans sa position limite d'insertion dans le trou borgne, par un simple coulissement mutuel résultant d'une poussée appliquée manuellement aux organes mâle et femelle, et par conséquent à ce que l'on puisse verrouiller la tige dans le trou borgne. En outre, également du fait de la présence des filetages, la manoeuvre de la serrure en vue de provoquer la pénétration de la saillie de l'un de ces organes dans la gorge de l'autre organe lors de la fermeture du cadenas ou l'escamotage de cette saillie en vue de l'ouverture du cadenas s'effectue alors que les organes mâle et femelle sont assemblés mutuellement par les filetages, c'est-à-dire sont retenus mutuellement à l'encontre d'une tendance à se dissocier par coulissement de la tige de l'organe mâle dans le trou borgne de l'organe femelle, ce qui facilite la manoeuvre de la serrure et plus généralement la manipulation du cadenas.

Naturellement, le pas des filetages peut être choisi librement et, en particulier, il peut s'agir de filetages à filet unique, pas comparativement faible et nombre comparativement important de spires, nécessitant une rotation relative de l'organe mâle et de l'organe femelle sur un certain nombre de tours avant que la tige ne parvienne à ladite position déterminée par rapport au trou borgne, ou encore de filetages comportant plusieurs filets de pas comparativement grand et de développement respectif inférieur à 360°, et par exemple du type baïonnette, permettant d'at- teindre ladite position de la tige par une rotation relative de l'organe mâle et de l'organe femelle sur moins de 380°, et par exemple sur 1/4 de tour, ces exemples n'étant nullement limitatifs.

On remarquera que le fait que l'étanchéité procurée par le joint résulte, au moins principalement, d'une mise en compression longitudinale du joint permet d'éviter des frottements importants entre celui-ci, d'une part, la tige de l'organe mâle ou le trou borgne de l'organe femelle selon qu'il est porté par l'organe femelle ou l'organe mâle, respectivement, d'autre part, et par conséquent d'éviter que la présence de ce joint n'entrave les mouvements d'ouverture et de fermeture du cadenas et que le joint ne se détériore rapidement.

Avantageusement, on prend en outre la précaution de protéger le joint d'une sollicitation mécanique par les dispositifs, tels que des chaînes, que le cadenas est destiné à assembler mutuellement ou à retenir et qui sont engagés sur une partie de la tige exposée entre l'épaulement de la partie mâle et l'épaulement de la partie femelle. A cet effet, on prévoit de préférence que la portée d'étanchéité de l'organe femelle soit située entre l'épaulement de l'organe femelle, d'une part, la saillie et la gorge, d'autre part, lorsque la tige occupe ladite position, ce qui place alors le joint d'étanchéité au moins partiellement à l'abri à l'intérieur de l'organe femelle.

Cette disposition peut être avantageusement utilisée pour renforcer l'étanchéité obtenue lorsque la tige occupe ladite position et, à cet effet, on prévoit de préférence que l'organe femelle présente une cavité transversale annulaire de révolution autour de l'axe longitudinal respectif, ouverte en sens centripète et raccordant la portée d'étanchéité correspondante à l'épaulement correspondant, pour offrir un appui centrifuge au joint annulaire lorsque la tige occupe ladite position ; on comprend aisément que sous l'effet de la compression longitudinale élastique qu'il subit lorsque la tige occupe cette position, le joint vient s'appliquer fermement, radialement, contre l'organe femelle à l'intérieur de cette cavité, ce qui permet d'offrir une surface de contact d'étanchéité accrue entre le joint et l'organe femelle, d'une part, et entre le joint et l'organe mâle, par réaction, d'autre part.

De préférence, cependant, la portée d'étanchéité de l'organe femelle est située suffisamment près de l'épaulement de celui-ci pour que, lorsque la tige occupe ladite position, la portée d'étanchéité de l'organe mâle coïncide sensiblement avec l'épaulement de l'organe femelle, ce qui permet d'éviter que, lors de l'ouverture ou de la fermeture du cadenas par coulissement longitudinal de la tige dans le trou borgne, un tel coulissement ne doive s'accomplir sur une distance importante alors que le joint assure une étanchéité entre la tige et le trou borgne, c'est-à-dire en créant entre ces derniers une chambre étanche dont un tel coulissement provoquerait une variation de volume, alors que le maintien de l'étanchéité mutuelle s'opposerait à tout mouvement d'air entre cette chambre et l'extérieur. Au contraire, le fait de situer le joint à proximité immédiate de l'épaulement de l'organe femelle permet de n'établir l'étanchéité entre la tige et le trou borgne, lors de la fermeture du cadenas par engagement de la tige de l'organe mâle dans le trou borgne de l'organe femelle, que lorsque la tige parvient à une position immédiatement voisine de ladite position déterminée, et de rompre l'étanchéité entre la tige et le trou borgne dès que la tige quitte cette position limite.

Cet effet est plus certainement atteint si, selon un mode de réalisation préféré, on prévoit que le joint se comporte comme un tout solidaire avec la tige lors du coulissement de cette dernière dans le trou borgne, en prévoyant que la tige présente une dépression transversale annulaire, de révolution autour de l'axe respectif, ouverte en sens centrifuge et située à proximité immédiate de la portée respective d'étanchéité, entre celle-ci, d'une part, la saillie et la gorge, d'autre part, lorsque la tige occupe ladite position, et que le joint annulaire soit monté en précontrainte dans la dépression annulaire de façon à être fixé sur la tige. Un tel montage du joint permet en outre, de façon générale, d'assurer dans les meilleures conditions l'imper- dabilité de celui-ci lorsque le cadenas est ouvert, et son positionnement précis par rapport à l'un des organes du cadenas, à savoir l'organe mâle, et par conséquent également par rapport à l'autre organe de ce cadenas, à savoir l'organe femelle, pendant les mouvements d'ouverture et de fermeture du cadenas.

La tige et le trou borgne peuvent naturellement présenter en outre des dispositions déjà connues en elles-mêmes, dont certaines présentent toutefois un intérêt accru, ou offrent des fonctions différentes, dans le cadre d'un cadenas conforme à la présente invention.

Ainsi, de façon connue, le trou borgne et la tige présentent de façon préférée des faces respectivement périphérique intérieure et périphérique extérieure cylindriques de révolution autour de l'axe longitudinal respectif, avec des diamètres respectifs sensiblement identiques pourétablir un contact mutuel glissant de guidage à la rotation relative autour des axes longitudinaux et de coulissement longitudinal relatif lorsque la tige est engagée dans le trou borgne, ce guidage présentant dans le cas d'un cadenas selon l'invention l'avantage de faciliter les mouvements de vissage et de dévissage mutuels de l'organe mâle et de l'organe femelle par vissage et dévissage de la tige à l'intérieur du trou borgne en assurant une coaxialité rigoureuse des organes mâles et femelles. Avantageusement, les filetages sont aménagés respectivement dans une zone d'extrémité libre de la tige et dans une zone de fond du trou borgne, de dimensions transversales respectives comparativement réduites, ce qui permet de disposer d'une surface d'appui radial mutuel de la face périphérique extérieure de la tige et de la face périphérique intérieure du trou borgne, vers l'intérieur de celui-ci à partir du joint et notamment autour de la saillie et de la gorge de verrouillage de la tige dans le trou borgne, et par conséquent d'obtenir que l'organe femelle et la partie de la tige qui est engagée dans celui-ci se comportent pratiquement comme un bloc vis-à-vis des sollicitations en flexion, c'est-à-dire offrent une résistance particulièrement efficace à de telles sollicitations.

De façon également connue, le cadenas comporte avantageusement des moyens de butée longitudinale mutuelle des organes mâles et femelles lorsque la tige occupe ladite position, par exemple par butée de ladite zone d'extrémité libre de la tige au fond du trou borgne. Ceci définit avec précision ladite position et permet de l'atteindre aisément, de façon aisément perceptible par la sensation de l'impossibilité de poursuivre l'introduction de la tige de l'organe mâle dans le trou borgne de l'organe femelle, c'est-à-dire d'obtenir non seulement un positionnement longitudinal relatif précis de la saillie escamotable et de la gorge destinée à la recevoir, permettant d'effectuer le verrouillage mutuel des organes mâle et femelle par engagement de la saillie dans la gorge, mais également la mise en contrainte longitudinale prédéterminée, voulue, du joint entre les portées respectives de l'organe mâle et de l'organe femelle lorsque la tige occupe ladite position.

Quelle que soit la façon dont peut ainsi être assurée l'étanchéité entre la tige de l'organe mâle et le trou borgne de l'organe femelle, les moyens amovibles d'obturation étanche de la serrure peuvent être avantageusement constitués par un bouchon étanche fixé de façon amovible, par complémentarité de formes ou conjugaison de forces, sur le premier organe dans une position dans laquelle ce bouchon présente autour de la serrure un contact d'étanchéité avec le premier organe ; ce bouchon étanche peut par exemple être emboîté en contrainte élastique dans ou sur le premier organe, ou bien on peut prévoir sur ce bouchon étanche, d'une part, et sur le premier organe, d'autre part, des filetages mutuellement complémentaires permettant de monter le bouchon par vissage dans ou sur le premier organe.

De préférence, l'organe mâle et l'organe femelle constituent respectivement le premier organe, portant la saillie escamotable, le mécanisme d'escamotage de celle-ci et en particulier la serrure, c'est-à-dire également les moyens amovibles d'obturation étanche de celle-ci, et le deuxième organe, dont la gorge est aménagée à l'intérieur du trou borgne, dans la face périphérique intérieure de celui-ci, de préférence cylindrique de révolution autour de l'axe longitudinal de l'organe femelle comme on l'a indiqué plus haut.

D'autres caractéristiques et avantages du cadenas selon l'invention ressortiront de la description ci-dessous, relative à un exemple non limitatif de réalisation, ainsi que des dessins annexés qui font partie intégrante de cette description.

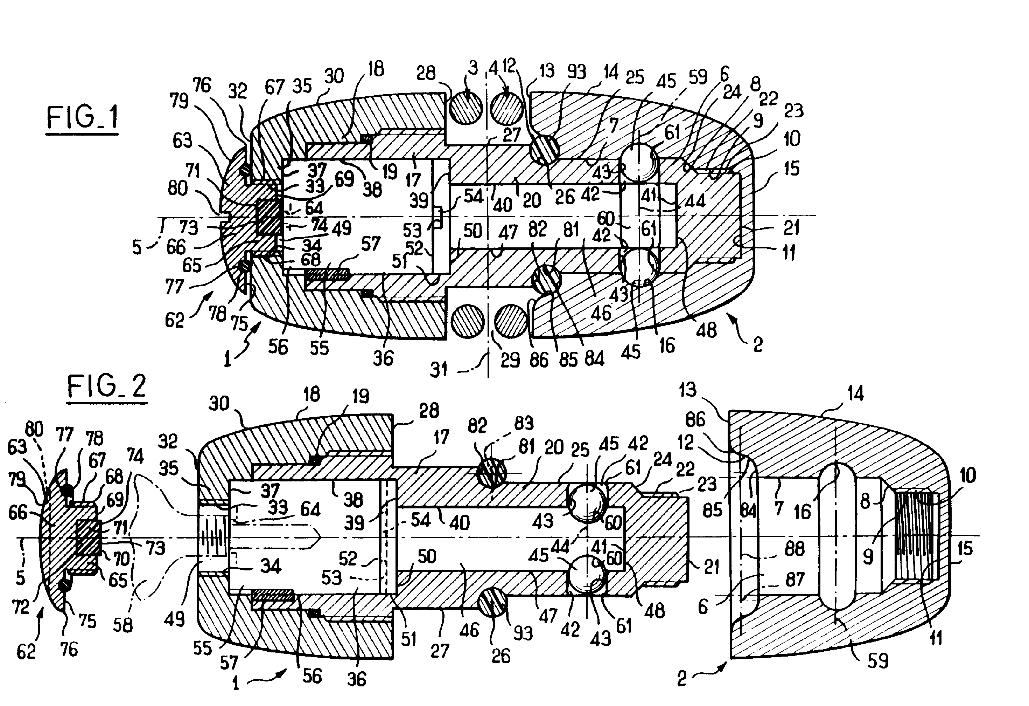

- La figure 1 montre un cadenas selon l'invention alors que la tige de l'organe mâle est verrouillée dans ladite position déterminée à l'intérieur du trou borgne de l'organe femelle de façon à verrouiller mutuellement l'organe mâle et l'organe femelle, en coupe par un plan passant par les axes longitudinaux respectifs, alors confondus, de l'organe mâle et de l'organe femelle.
- La figure 2 montre, en une vue analogue, l'organe mâle, l'organe femelle et le bouchon constituant les moyens amovibles d'obturation étanche de la serrure, dans une position relative immédiatement préalable à leur engagement mutuel ou immédiatement postérieure à leur séparation.

De façon générale, on a désigné respectivement par 1 et par 2 l'organe mâle et l'organe femelle du cadenas selon l'invention, utilisé dans cet exemple, comme il est illustré à la figure 1, pour assembler deux anneaux 3, 4 étroitement juxtaposés tels que des maillons extrêmes de chaînes à raccorder mutuellement ou des passants spécifiquement prévus à cet effet sur des battants de porte à verrouiller en position de fermeture bien que, naturellement, le cadenas selon l'invention puisse connaître d'autres applications comme par exemple être monté sur un anneau unique pour empêcher le franchissement de cet anneau par une pièce par ailleurs engagée sur celui-ci.

Dans cet exemple préféré de mise en oeuvre de l'invention, l'organe mâle 1 et l'organe femelle 2 présentent des formes générales respectives de révolution autour d'axes longitudinaux qui se confondent lorsque l'organe mâle et l'organe femelle occupent leur position illustrée aux figures 1 et 2, si bien que ces axes sont désignés par la même référence 5.

Comme il ressort plus particulièrement de la figure 2, l'organe femelle 2 se présente de préférence sous la forme d'une pièce massive et intrinsèquement étanche, par exemple métallique, creusée d'un trou borgne 6 délimité sur la majeure partie de sa dimension longitudinale par une face périphérique intérieure 7 cylindrique de révolution autour de l'axe 5.

Vers l'intérieur de cette pièce, la face périphérique intérieure 7 se raccorde par un épaulement annulaire 8, tronconique de révolution autour de l'axe 5, à une face périphérique intérieure 9 également cylindrique de révolution autour de l'axe 5 mais présentant un diamètre inférieur à celui de la face périphérique intérieure 7 et comportant un filetage 10 d'axe 5. Cette face périphérique intérieure 9 se raccorde elle-même à une face de fond 11 du trou borgne 6, laquelle représente la forme d'un disque plan, perpendiculaire à l'axe 5.

Vers l'extérieur de ladite pièce, le trou borgne 6 est bordé par une cavité 12, annulaire de révolution autour de l'axe 5, placée en retrait centrifuge par rapport à la face périphérique intérieure 7 qui s'y raccorde et débouchant d'une part radialement vers l'axe 5 et longitudinalement vers l'extérieur du trou borgne 6. Par l'intermédiaire de cette cavité 12, dont une forme préférée et la fonction seront indiquées plus loin, le trou borgne 6 débouche à l'intérieur d'une face annulaire plane, de révolution autour de l'axe 5, laquelle face définit autour du trou borgne 6 un épaulement 13 orienté comme la face de fond 8. Dans le sens d'un éloignement radial par rapport à l'axe 5, la face formant épaulement 13 raccorde la cavité 12 bordant le trou borgne 6 à une face périphérique extérieure 14 de la pièce constituant l'organe femelle 2. La forme de cette face périphérique extérieure 14 peut être choisie librement, par exemple parmi les formes de révolution autour de l'axe 5 pour éviter au maximum d'offrir une prise à des outils tels que des pinces ou des tenailles si l'on privilégie la résistance du cadenas aux tentatives d'effraction, étant entendu que des formes anguleuses, analogues à celles d'un écrou, peuvent être également choisies si l'on privilégie la facilité d'ouverture et de fermeture du cadenas par rotation relative des organes mâle 1 et femelle 2 autour de l'axe 5. Dans l'exemple illustré, la face périphérique extérieure 14 présente une forme de révolution autour de l'axe 5 et converge, avec un contour convexe lorsqu'elle est vue en coupe par un plan incluant l'axe 5, depuis la face formant épaulement 13 jusqu'à une face extrême 15 en forme de disque plan, d'axe 5, délimitant avec la face de fond 11 du trou borgne 6 le fond (non référencé) de celui-ci.

En creux dans la face périphérique intérieure 7 du trou borgne 6 est aménagée entre la dépression 12 et l'épaulement tronconique 8 une gorge 16 annulaire de révolution autour de l'axe 5 et présentant un plan moyen 59 perpendiculaire à celui-ci. Lorsqu'elle est vue en coupe par un plan incluant cet axe, cette gorge 16 présente une section approximativement hémi- circulaire, centrée dans le plan moyen 59, avec un développement angulaire toutefois légèrement inférieur à 180°.

Comme il ressort également plus particulièrement de la figure 2, l'organe mâle 1 comporte quant à lui dans l'exemple non limitatif illustré deux pièces 17,18 de forme générale respective de révolution autour de l'axe 5, de préférence massives et par exemple métalliques, intrinsèquement étanches et solidarisées mutuellement de façon étanche. Par exemple, la pièce 17 est à cet effet vissée longitudinalement dans la pièce 18, avec interposition d'un joint annulaire d'étanchéité 19, de révolution autour de l'axe 5, par l'intermédiaire de filetages mutuellement complémentaires, non référencés, d'axe 5. Ces deux pièces 17 et 18, bien que séparables en vue d'opérations de maintenance, seront considérées par la suite comme formant un tout solidaire.

La pièce 17 constitue pour l'organe mâle 1 une tige 20 présentant, successivement à partir d'une face extrême libre 21 en forme de disque plan, perpendiculaire à l'axe 5, de diamètre identique à celui de la face de fond 11 du trou borgne 6, une face périphérique extérieure 22 cylindrique de révolution autour de l'axe 5 et présentant un filetage 23 complémentaire du filetage 10 de la face périphérique intérieure 9 du trou borgne 6 et une dimension longitudinale identique à celle de cette face 9, un épaulement 24 tronconique de révolution autour de l'axe 5 et complémentaire de l'épaulement 8 du trou borgne 6, notamment de même conicité, une face périphérique extérieure 25 cylindrique de révolution autour de l'axe 5 avec un diamètre sensiblement identique à celui de la face périphérique intérieure 7 du trou borgne 6 et une dimension longitudinale identique à celle de cette face 7, une dépression 26 annulaire de révolution autour de l'axe 5 et dont une forme préférée et la fonction seront indiquées plus loin, et une face périphérique extérieure 27 cylindrique de révolution autour de l'axe 5 avec un diamètre supérieur à celui de la face périphérique extérieure 25 bien qu'inférieure au diamètre maximal de la face formant épaulement 13 de l'organe femelle 2.

Ainsi, par translation longitudinale relative et rotation coaxiale relative des organes mâle 1 et femelle 2, on peut fermer le cadenas en engageant la tige 20 dans le trou borgne 6, en plaçant la face périphérique extérieure 25 en contact glissant avec la face périphérique intérieure 7 pour assurer la coaxialité des deux organes 1 et 2 puis, en conservant ce contact, en vissant l'un dans l'autre les filetages 23 et 10 jusqu'à ce que la tige 20 bute longitudinalement contre la face de fond 11 du trou borgne 6, par sa face extrême 21, et contre l'épaulement tronconique 8, par l'épaulement tronconique 24, ce qui définit pour la tige 20 une position limite, déterminée, d'engagement dans le trou borgne 6, illustrée à la figure 1. Dans cette position limite, dans laquelle la tige 20 peut être provisoirement verrouillée dans le trou borgne 6 par des moyens qui seront décrits plus loin, la face périphérique extérieure 27 de la tige est intégralement située en saillie longitudinale hors du trou borgne 6, et se termine vers l'organe femelle 2 sensiblement coplanairement avec la face formant épaulement 13 de celle-ci. A partir de cette position limite, une rotation relative opposée des organes mâle 1 et femelle 2 permet de dégager la tige 20 du trou borgne 6 et de séparer les organes mâle et femelle 1, ce qui correspond à l'ouverture du cadenas.

A une distance longitudinale de la face extrême 21 supérieure à la distance longitudinale séparant de la face de fond 11 du trou borgne 6 la face formant épaulement 13 de l'organe femelle 2, la face périphérique extérieure 27 de la tige 20 se raccorde à une face formant épaulement 28, plane, annulaire de révolution autour de l'axe 5 auquel elle est perpendiculaire. Cette face 28, définie pour partie par la pièce 17 et pour partie par la pièce 18, qui coiffe la pièce 17 à l'opposé de son extrémité libre définie par la face extrême 21, est orientée identiquement à cette face extrême 21 de façon à se placer en regard de la face formant épaulement 13 de la pièce constituant la partie femelle 2 lorsque la tige 20 est engagée dans le trou borgne 6, en respectant vis-à-vis de cette face formant épaulement 13 un espace 29, annulaire de révolution autour de l'axe 5, lorsque la tige 20 occupe sa position limite d'engagement dans le trou borgne 6, comme il ressort de la figure 1. On peut ainsi emprisonner entre les faces formant épaulements 13 et 28, dans l'espace 29, les anneaux juxtaposés 3 et 4, engagés autour de la face périphérique extérieure 27 de la tige 20, ou un anneau unique ainsi disposé.

Dans le sens d'un éloignement radial par rapport à l'axe 5, la face formant épaulement 28 raccorde la face périphérique extérieure 27 de la tige 20 à une face périphérique extérieure 30 de la pièce 18, laquelle face périphérique extérieure 30 peut présenter toute forme choisie à volonté. Dans l'exemple illustré, cette face périphérique extérieure 30 présente une forme identique à celle de la face périphérique extérieure 14 de la pièce formant l'organe femelle 2, de façon à être exactement symétrique de la face périphérique extérieure 14, par rapport à un plan moyen 31 perpendiculaire à l'axe 3 et équidistant des faces formant épaulements 13 et 28 lorsque la tige 20 occupe sa position limite d'engagement dans le trou borgne 6. Notamment, dans l'exemple illustré, la face périphérique extérieure 30 de la pièce 18 converge depuis la face formant épaulement 28 jusqu'à une face extrême 32 plane, annulaire de révolution autour de l'axe 5 auquel elle est perpendiculaire, laquelle face 32 est disposée symétriquement de la face extrême 15 de la pièce formant l'organe femelle 2 dans la position limite précitée, mais d'autres formes pourraient également être choisies sans que l'on sorte pour autant du cadre de la présente invention.

Dans le sens d'un rapprochement radial vis-à-vis de l'axe 5, la face extrême 32 raccorde la face périphérique extérieure 30 de la pièce 18 à une face périphérique intérieure 39, cylindrique de révolution autour de l'axe 5 et munie d'un filetage 34 d'axe 5, d'un rebord annulaire 35 de la pièce 18. Ce rebord 35, de révolution autour de l'axe 5, définit par sa face périphérique intérieure 39 un trou axial 49 de la pièce 18 et ferme partiellement un trou borgne 36 prolongeant coaxialement le trou 49 à l'intérieur de l'organe mâle 1 et délimité conjointement par les pièces 17 et 18. La face périphérique intérieure 33 du rebord 35 raccorde elle-même la face extrême 32 à une face annulaire, plane 37, de révolution autour de l'axe 5 et tournée vers l'intérieur du trou borgne 36, laquelle face 37 relie la face 33 à une face périphérique intérieure 38 du trou borgne 36. Cette face 38, définie pour partie par la pièce 18 et pour partie par la pièce 17, est cylindrique de révolution autour de l'axe 5 avec un diamètre supérieur à celui de la face périphérique intérieure 32, mais toutefois inférieur à celui de la face périphérique extérieure 27 de la tige 20. En effet, la face périphérique intérieure 38 s'étend longitudinalement approximativement jusqu'au niveau de la face formant épaulement 28, niveau auquel elle se raccorde, par une face annulaire, plane 39 de révolution autour de l'axe 5 et tournée vers la face 37 du rebord 35 la pièce 14, à une face périphérique intérieure 40 cylindrique de révolution autour de l'axe 5 avec un diamètre inférieur à celui de la face périphérique extérieure 22 de la tige 20. Les faces 39 et 40 sont définies par la pièce 17. La face 40 s'étend longitudinalement, à l'intérieur de la tige 20, jusqu'au niveau du raccordement de la face périphérique extérieure 25 de celle-ci avec l'épaulement tronconique 24, niveau auquel elle se raccorde à une face de fond 41 du trou borgne 36, laquelle présente la forme d'un disque plan, perpendiculaire à l'axe 5.

A une distance longitudinale moyenne de la face extrême 21 de la tige 20 correspondant à la distance longitudinale séparant mutuellement le plan moyen 59 de la gorge 16 et la face de fond 11 du trou borgne 6, la tige 20 est percée de deux trous 42, diamétralement opposés, en référence à l'axe 5, et dont chacun débouche d'une part dans la face périphérique extérieure 25 de la tige 20 et d'autre part dans la face périphérique intérieure 40 de celle-ci. Chacun des trous 42 présente ainsi une face périphérique intérieure respective 43 pour l'essentiel cylindrique de révolution autour d'un axe 44 commun, perpendiculaire à l'axe 5 et placé dans le plan moyen 59 de la gorge 16 lorsque la tige 20 bute par la face 21 et par l'épaulement 24 contre la face 11 et l'épaulement 8, respectivement, du trou borgne 6.

On remarquera que si l'on excepte ces trous radiaux 42 et le trou axial 49 que délimite la face périphérique intérieure 33 du rebord 35, les pièces 17 et 18, intrinsèquement étanches et raccordées mutuellement de façon étanche par l'intermédiaire du joint 19, délimitent le trou borgne 36 de façon étanche.

Les diamètres respectifs des faces 43 sont inférieurs au diamètre de la face périphérique intérieure 40 de la tige 20 et égaux entre eux, ainsi qu'au diamètre de la section approximativement hémi- circulaire de la gorge 16, de telle sorte que, lorsque la face 21 et l'épaulement 24 de la tige 20 butent contre la face de fond 11 et l'épaulement 8 du trou borgne 6, respectivement, deux billes 45 qui présentent un diamètre identique à celui des faces périphériques intérieures respectives 43 des trous 42 et sont guidées au coulissement radial, en référence à l'axe 5, respectivement dans l'un et l'autre de ces trous 42 puissent s'engager pratiquement pour moitié dans la gorge 16 en formant une saillie radiale, en référence à l'axe 5, par rapport à la face périphérique extérieure 25 de la tige 20, comme on l'a illustré à la figure 1 et, si elles sont immobilisées en une telle position, empêcher l'extraction de la tige 20 hors du trou borgne 6.

Pour retenir les billes 45 dans une telle position, ou au contraire autoriser leur escamotage vers l'axe 5 par rapport à la face périphérique extérieure 25 de la tige 20, celle-ci renferme intérieurement une barre coaxiale 46 guidée à la rotation relative autour de l'axe 5 sans autre possibilité de déplacement relatif.

Cette barre 46 présente une face périphérique extérieure 47 cylindrique de révolution autour de l'axe 5 avec un diamètre sensiblement identique à celui de la face périphérique intérieure 40 de la tige 20 de telle sorte que s'établisse entre ces faces 47 et 40 un contact coulissant de guidage à la rotation relative autour de l'axe 5.

Vers la face de fond 41 du trou borgne 36, la face périphérique extérieure 47 de la borne 46 se raccorde à une face extrême 45 de celle-ci, laquelle face extrême 48 présente la forme d'un disque plan, perpendiculaire à l'axe 5, de telle sorte que puisse s'établir entre ces faces 48 et 41 un contact de butée longitudinale mutuelle, avec possibilité de rotation relative autour de l'axe 5.

A l'opposé de son raccordement avec la face extrême 48, à une distance longitudinale de celle-ci correspondant sensiblement à la distance longitudinale séparant mutuellement les faces 39 et 41 du trou borgne 36, la face périphérique extérieure 47 de la batte 46 se raccorde à une face annulaire plane 50, de révolution autour de l'axe 5 auquel elle est perpendiculaire. Cette face 50, de même orientation que la face extrême 48, est en contact glissant avec la face 39 du trou borgne 36 et raccorde la face 47 à une autre face périphérique extérieure 51 également cylindrique de révolution autour de l'axe 5, avec toutefois un diamètre supérieur à celui de la face 47 et sensiblement identique à celui de la face 38 de telle sorte que s'établisse entre les faces 51 et 38 un contact glissant le guidage de la rotation relative autour de l'axe 5.

La barre 46 s'ajuste ainsi aussi précisément que possible dans la pièce 17, au niveau de la tige 20 ainsi que dans la partie de la pièce 17 directementadjacen- te à cette tige 20 qui conserve ainsi, du fait de la présence de la barre 46, une bonne résistance mécanique et notamment une bonne rigidité en dépit de son caractère creux.

A une distance de la face 50, suivant l'axe 5, sensiblement inférieure à la distance séparant, suivant cet axe, les faces 39 et 37 du trou borgne 36, la face périphérique extérieure 51 de la barre 46 se raccorde à une face extrême plane 52, perpendiculaire à l'axe 5 et creusée d'une mortaise 53 radiale par rapport à l'axe 5. Par cette mortaise 53, la barre 42 est en prise, de façon solidaire à la rotation autour de l'axe 5, avec un tenon coaxial 54 d'une serrure 55 d'un type répandu dans le commerce, logée dans le trou borgne 36 et comportant un corps 56 épousant la face périphérique intérieure 38 de celui-ci, de la face 52 de la barre 46 à la face 37 du rebord 35. Les faces 37 et 52 offrent au corps 56 un appui l'immobilisant longitudinalement à l'intérieur du trou borgne 36, entre les pièces 17 et 18, et la face 38 de celles-ci l'immobilise à l'encontre de tout déplacement radial en référence à l'axe 5 alors qu'il est immobilisé par rapport à la pièce 17 définissant la tige 20, à l'encontre d'une rotation relative, par tout moyen approprié et par exemple par clavetage comme on l'a illustré en 57. Le corps 56 renferme des moyens non représentés, connus en eux-mêmes, permettant, au moyen d'une clef amovible 58 introduite à volonté dans le corps 56 par l'intermédiaire d'un trou de serrure 64 accessible par le trou 49, à l'opposé du tenon 54 suivant l'axe 5, de faire tourner ce tenon 54 et avec lui la barre 46 de 90° autour de l'axe 5 par rapport au corps 56 et à la pièce 17, c'est-à-dire par rapport à l'organe mâle 1 dans son ensemble.

Pour qu'une telle rotation se traduise soit par une poussée centrifuge appliquée aux billes 45 pour introduire ces dernières dans la gorge 16 comme il est illustré à la figure 1, ou au contraire laisser ces billes revenir vers l'axe 5 comme on l'a illustré à la figure 2, l'épaisseur radiale de la tige 20 entre ses faces 40 et 25, en référence à l'axe 5, est sensiblement égale à la différence entre le diamètre d'une bille 45 et la profondeur radiale maximale de la gorge 16, mesurée radialement en référence à l'axe 5, suivant le plan moyen 59, à partir de la face périphérique intérieure 7 du trou borgne 6, c'est-à-dire légèrement supérieure au rayon d'une bille 45, auquel cette profondeur radiale maximale est légèrement inférieure, et la barre 46 est agencée comme une came rotative.

Plus précisément, suivant un plan moyen non référencé, perpendiculaire au plan 5 et contenant l'axe 44 lorsque la barre 46 s'appuie par sa face 48 contre la face de fond 41 du trou borgne 36, la face périphérique extérieure 47 de la barre 46 est creusée de deux gorges 60, rectilignes, diamétralement opposées en référence à l'axe 5 par rapport auquel elles sont mutuellement symétriques. Chacune de ces gorges 60 est approximativement hémi-cylindrique de révolution autour d'un axe respectif 92, situé dans le plan moyen précité, non référencé, contenant l'axe 44, et présente un diamètre sensiblement identique à celui d'une bille 45 et un développement angulaire, en référence à son axe 92, légèrement inférieur à 180° et sensiblement identique à celui de la section de la gorge 16 par un plan incluant l'axe 5. Les axes 92 sont parallèles à l'axe 44 du trou 42 dans la position illustrée à la figure 1 et perpendiculaires à cet axe 44 dans la position illustrée à la figure 2.

Les gorges 60 présentent ainsi, radialement en référence à l'axe 5, une profondeur maximale dont la somme avec l'épaisseur radiale de la tige 20 entre les faces 40 et 25 de celle-ci est sensiblement égale au diamètre des billes 45 de telle sorte que, dans la position de la barre 46 illustrée à la figure 2 obtenue par une action appropriée sur la serrure 55 au moyen de la clef 58, les billes 45 puissent effectivement s'escamoter totalement par rapport à la face périphérique extérieure 25 de la tige 20 et libérer celle-ci vis-à-vis d'une extraction, suivant l'axe 5, hors du trou borgne 6. On remarquera que les billes s'escamotent d'elles-mêmes lorsque, en dévissant l'organe mâle 1 par rapport à l'organe femelle 1 et en tirant les organes mâle et femelle 1 et 2 dans le sens d'un éloignement relatif suivant l'axe 5, on provoque un effet de came de la gorge 16 sur les billes 45. Lorsque la tige 20 est totalement dégagée du trou borgne 6, les billes 45 restent libres d'occuper toute position entre leur position de total escamotage par rapport à la face périphérique extérieure 25 de la tige 20 ou leur position de saillie par rapport à celle-ci, un léger matage 61 à l'embouchure des trous 42 dans la face 25 de la tige 20 empêchant les billes 45 de s'éloigner davantage par rapport à l'axe 5. Lorsqu'on engage à nouveau la tige 20 à l'intérieur du trou borgne 6, les billes 45 s'escamotent d'elles-mêmes au franchissement de la cavité 12 bordant le trou borgne 6. Lorsque l'on poursuit ce mouvement d'introduction suffisamment pour que la face 21 et l'épaulement 24 viennent buter contre la face 11 et l'épaulement 8, respectivement, en vissant le filetage 23 dans le filetage 10, les billes 45 viennent se replacer en regard de la gorge 16 et, au moyen de la clef 58, on peut provoquer une rotation de la barre 46 sur 90°, ce qui provoque par effet de came un mouvement centrifuge des deux billes 45 et leur retour à la position illustrée à la figure 1, dans laquelle elles s'appuient sur la face périphérique extérieure 47 de la barre 46, hors des gorges 60, pour former par rapport à la face périphérique extérieure 25 de la tige 20 une saillie épousant aussi étroitement que possible la section de la gorge 16 pour s'opposer à l'extraction de la tige 20 hors du trou borgne 6.

Naturellement, d'autres moyens de verrouillage mutuels de la partie mâle 1 et de la partie femelle 2 du cadenas selon l'invention pourraient être choisis sans que l'on sorte pour autant du cadre de celle-ci, et on pourrait notamment prévoir la gorge 16 du trou borgne 6 en plusieurs exemplaires, répartis longitudinalement, en prévoyant dans des positions appropriées d'une part, sur la tige 20, des billes 45 et des trous 42 et d'autre part, sur la barre 46, des gorges 60, ou encore prévoir les billes et leur mécanisme d'escamotage, constitué par la barre 46 et la serrure 55, sur la partie femelle 2 et la gorge, ou chaque gorge, destinée à recevoir ces billes sur la tige 20 de l'organe mâle 1 ; de même, la forme des organes mâle et femelle 1, 2 pourrait être choisie différente de la forme décrite.

De façon caractéristique de la présente invention, des moyens sont prévus pour que les billes 45 et le mécanisme d'escamotage de celles-ci, constitué par la barre 46 et la serrure 55, soient enfermées de façon étanche lorsque le cadenas est fermé, comme le montre la figure 1.

A cet effet, en complément de l'étanchéité respective des organes mâle 1 et femelle 2, on prévoit conformément à la présente invention d'une part des moyens amovibles 62 d'obturation étanche du trou 49 livrant accès à la serrure 55, et d'autre part un joint annulaire 93 d'étanchéité entre la tige 20 et l'organe femelle 2, longitudinalement à l'opposé de la face de fond 11 du trou borgne 6 et de la face extrême libre 21 de la tige 20 par rapport à la gorge 16 et aux trous 42 de guidage des billes 45, respectivement.

Les moyens amovibles 62 d'obturation étanche du trou 49 comportent dans l'exemple illustré un bouchon étanche 63 susceptible d'être vissé dans le filetage 34 de la face périphérique intérieure 33 du rebord 35 de la pièce 18 et de s'appliquer de façon étanche d'une part contre la face extrême 32 de la pièce 30, autour du trou 49, et d'autre part, à l'intérieur du trou 49, contre la serrure 55 autour du trou 64 d'introduction de la clef 58 dans celle-ci.

A cet effet, le bouchon 63 comporte une pièce rigide, massive, intrinsèquement étanche et par exemple métallique, présentant la forme générale d'un boulon comportant une tige 65 et une tête 66.

La tige 65 est délimitée par une face périphérique extérieure 67 de forme générale cylindrique de révolution autour de l'axe 5 et comportant un filetage 68 complémentaire du filetage 34 de la face périphérique intérieure 33 du rebord 35 de la pièce 18, de façon à permettre le vissage et le dévissage du bouchon 63 à l'intérieur du rebord 35. La tige 65 est par ailleurs délimitée par une face d'extrémité libre 69 plane, annulaire de révolution autour de l'axe 5 auquel elle est perpendiculaire, cette face 69 étant destinée à se placer en regard de la serrure 55, à l'intérieur du trou 49, lorsque le bouchon 63 est vissé dans celui-ci. La face 69 raccorde la face périphérique extérieure 68 à une face périphérique intérieure 70, cylindrique de révolution autour de l'axe 5 avec un diamètre supérieur à toute dimension du trou 64 mesuré perpendiculairement à l'axe 5, cette face périphérique intérieure 70 délimitant à l'intérieur du bouchon 63 un trou borgne 71, avec une face de fond 72 en forme de disque plan, perpendiculaire à l'axe 5. Le trou borgne 71 ainsi défini renferme partiellement et retient solidairement, par tout moyen approprié, un tampon 73 d'un matériau étanche, élastiquement compressible au moins longitudinalement, lequel tampon 73 présente une forme étroitement complémentaire de celle du trou borgne 71 si ce n'est que ses dimensions longitudinales sont supérieures, de telle sorte qu'en l'absence de compression longitudinale, il présente en saillie longitudinale par rapport à la face d'extrémité libre 69 du bouchon 63 une face frontale 74 en forme de disque plan, perpendiculaire à l'axe 5. Lorsque le bouchon 63 est vissé dans le trou 49 du rebord 35, comme le montre la figure 1, le tampon 73 vient s'appliquer par sa face frontale 74, en contrainte de compression longitudinale, contre la serrure 55 autour du trou 64 de celle-ci pour obturer ce trou 64 de façon étanche.

A l'opposé de son raccordement avec la face d'extrémité 69, la face 67 de la tige 65 se raccorde à la tête 66, et plus précisément à une face annulaire plane 75 de celle-ci, de révolution autour de l'axe 5 et tournée comme la face d'extrémité libre 69. A partir de son raccordement avec la face périphérique extérieure 67 de la tige 65, cette face 75 s'étend, dans le sens d'un éloignement par rapport à l'axe 5, jusqu'à une périphérie 76 circulaire, centrée sur l'axe 5 et présentant un diamètre supérieur à celui de la face périphérique intérieure 33 du rebord 35. Entre son raccordement avec la face périphérique extérieure 67 de la tige 65 et cette périphérie extérieure 76, la face annulaire 75 présente une gorge 77 annulaire de révolution autour de l'axe 5 et placée en regard de la face extrême 32 de la pièce 18, autour du trou 49, lorsque le bouchon 43 est vissé dans ce dernier. Cette gorge 77, présentant par exemple lorsqu'elle est vue en coupe par un plan incluant l'axe 5 une section hémi- circulaire, contient partiellement et retient solidairement par tout moyen approprié, un joint torique 78, de révolution autour de l'axe 5 et élastiquement compressible au moins longitudinalement, lequel joint torique présente lorsqu'il est vu en coupe par un plan incluant l'axe 5 une section circulaire de même diamètre que la section de la gorge 77 de façon à former, en l'absence de contrainte de compression longitudinale, une saillie longitudinale sur cette face 75 autour de la tige 65 du bouchon 63. Longitudinalement, le tampon 73, la cavité 71 le recevant, la tige 65 notamment par sa face 67, le joint torique 78 et la gorge 77 qui le reçoit sont dimensionnés de telle sorte que le joint 78 s'applique contre la face frontale 32 de la pièce 18, en contrainte de compression longitudinale, concomitamment à l'application du tampon 73 en contrainte de compression longitudinale contre la serrure 55, et que l'étanchéité s'établisse par conséquent simultanément entre la tête 66 du bouchon 63 et la pièce 18, autour du trou 49, par l'intermédiaire du joint 78, et entre la tige 65 du bouchon 63 et la serrure 55, par l'intermédiaire du tampon 73, autour du trou de serrure 64.

Par sa périphérie circulaire 76, la face 75 de la tête 66 du bouchon 63 se raccorde à une face 79 délimitant la tête 66 à l'opposé de la face 75, laquelle face 79 présente une forme indifférente au regard de la présente invention et par exemple la forme d'une calotte de révolution autour de l'axe 5. Toutefois, cette face 79 est avantageusement munie de moyens permettant l'application d'un outil d'entraînement du bouchon 63 à la rotation autour de l'axe 5 par rapport à la pièce 18, c'est-à-dire par rapport à l'organe mâle 1, en vue du vissage et du dévissage du bouchon 63, par exemple sous la forme d'une gorge 80 rectiligne, radiale en référence à l'axe 5, et destinée à recevoir la lame (non représentée) d'un tournevis.

Naturellement, d'autres conceptions des moyens amovibles 62 d'obturation étanche de la serrure 55 pourraient être choisies sans que l'on sorte pour autant du cadre de la présente invention. En particulier, le bouchon composite qui a été décrit, pour l'essentiel formé d'un matériau rigide complété par le tampon 73 et le joint 78 quant à eux élastiquement compressibles, pourrait être remplacé par un bouchon monobloc, intrinsèquement élastiquement compressible, emboîté à force, c'est-à-dire notamment en contrainte de compression élastique radiale en référence à l'axe 5, à l'intérieur de la face périphérique intérieure 33 du trou 49 alors démuni de filetage 34.

Le joint annulaire 93, torique de révolution autour de l'axe 5 dans l'exemple illustré bien que d'autres formes puissent être également choisies, est quant à lui reçu dans la dépression 26 de la tige 20, de façon à être solidarisé avec celle-ci, et destiné à venir s'appliquer en contrainte de compression longitudinale et, par réaction, en contrainte de compression radiale en référence à l'axe 5 à l'intérieur de la cavité 12 de l'organe femelle 2 lorsque la tige 20 occupe sa position limite de pénétration dans le trou borgne 6, illustrée à la figure 1.

A cet effet, la dépression 26 comporte deux zones 81 et 82, l'une et l'autre annulaires de révolution autour de l'axe 5. La zone 81, longitudinale et tournée en sens centrifuge en référence à l'axe 5, jouxte directement la face périphérique extérieure 25 de la tige 20 et forme un rétreint radial, en référence à l'axe 5, par rapport à la face périphérique extérieure 25 de la tige 20, avec un diamètre minimal légèrement supérieur au diamètre minimal du joint torique 93 lorsque celui-ci est au repos, c'est-à-dire en l'absence de contrainte, de telle sorte que le joint torique 93, placé autour de cette zone 81, soit soumis à une légère précontrainte élastique d'expansion radiale, propre à le retenir dans la zone 81 sur la tige 20. La zone 82, raccordant la zone 81 à la face périphérique extérieure 27 de la tige 20, est transversale à l'axe 5 et tournée dans un sens longitudinal identique à celui de la face d'extrémité libre 21 de la tige 20, par exemple, pour constituer vis-à-vis du joint 93 une portée transversale d'étanchéité par appui longitudinal mutuel lorsque la tige 20 de l'organe mâle 1 occupe sa position limite d'engagement dans le trou borgne 6 de l'organe femelle 2. Avantageusement, dans la mesure où le joint 93 présente lorsqu'il est vu en coupe par un plan incluant l'axe 5 une section circulaire de diamètre déterminé, en l'absence de contrainte ou sous la légère contrainte résultant de son montage sur la zone 81 de la tige 20, les zones 81 et 82 se complètent pour présenter, lorsqu'elles sont vues en coupe par un plan incluant l'axe 5, une section en forme d'arc de cercle de diamètre sensiblement identique à celui de la section précitée du joint 63, centrée en un point 83 situé entre les prolongements géométriques respectifs des faces périphériques extérieures 25 et 27 de la tige 20, et par exemple équidistant de ces prolongements géométriques de telle sorte que la section précitée des zones 81 et 82 de la dépression 26 présente la forme d'un arc de cercle d'un développement angulaire de 180° en référence au point 83. La différence entre les rayons respectifs des faces périphériques extérieures 25 et 27 de la tige 20, en référence à l'axe 5, est inférieure au diamètre de la section précitée du joint 93 de telle sorte que lorsque ce dernier est installé dans la dépression 26, il forme une saillie centrifuge, en référence à l'axe 5, par rapport à la face périphérique extérieure 27 de la tige 20.

La cavité 12 présente quant à elle trois zones 84, 85, 86 se succédant dans cet ordre de son raccordement avec la face périphérique intérieure 7 du trou borgne 6 de l'organe femelle 2 à la face formant épaulement 13 de cet organe 2, ces trois zones 84, 85, 86 étant annulaires de révolution autour de l'axe 5. La zone 84, qui jouxte directement le raccordement de la cavité 12 avec la face périphérique intérieure 7 du trou borgne 6, est transversale et tournée longitudinalement comme la face de fond 11 du trou borgne 6, de façon à se placer en regard, longitudinalement, de la zone 82 de la dépression 26 lorsque la tige 20 occupe sa position d'engagement maximal dans le trou borgne 6 et à constituer pour le joint 93 une portée d'étanchéité par appui longitudinal mutuel, avec compression longitudinale prédéterminée du joint 63 entre les portées définies par les zones 82 et 84, respectivement. La zone 85, quant à elle, est longitudinale et tournée vers l'axe 5 de façon à se placer radialement en regard de la zone 81 de la dépression 26 dans la position limite précitée de la tige 20 et constitue alors pour le joint 93 d'une part un logement le protégeant d'un contact avec les anneaux 3, 4 ou avec tout autre organe se trouvant dans l'espace 29, et d'autre part un appui radial centrifuge, en référence à l'axe 5, dans la mesure où le joint 93 mis en compression longitudinale entre les zones 82 et 84 de la dépression 26 et de la cavité 12, respectivement, tend d'une part à s'appliquer plus fermement, en sens centripète, sur la zone 81 de la dépression 26 et tend d'autre part à s'expanser en sens centrifuge, tendance que la présence de la zone 85 de la cavité 12 permet, en offrant au joint 93 un appui centrifuge s'y opposant, d'utiliser pour améliorer l'étanchéité entre le joint 93 et l'organe femelle 2 à l'intérieur de la cavité 12. La zone 86 constitue quant à elle un élargissement radial progressif, en référence à l'axe 5, depuis la zone 85 et jusqu'à la face formant épaulement 13 et facilite l'introduction du joint 63 dans la cavité 12 lors de la fermeture du cadenas et l'extraction du joint 63 hors de la cavité 12 lors de l'ouverture du cadenas. Avantageusement, lorsqu'elles sont vues en coupe par un plan incluant l'axe 5 et considérées dans leur globalité, les zones 84 et 85 de la cavité 12 présentent comme les zones 81 et 82 de la dépression 26 la forme d'un arc de cercle d'un diamètre sensiblement identique à celui de la section du joint annulaire 63 par un plan incluant l'axe 5, avec un développement angulaire légèrement supérieur à 90° et un centre 87 situé sensiblement à la même distance de l'axe 5 que le point 83 mais disposé plus loin, longitudinalement, de la face de fond 11 du trou borgne 6 que le point 83 n'est éloigné longitudinalement de la face d'extrémité libre 21 de la tige 20, d'une valeur prédéterminée de telle sorte que le fait que la tige 20 parvienne dans sa position limite d'engagement à l'intérieur du trou borgne 6 de l'organe femelle 2 se traduise par l'application au joint 93 d'une contrainte déterminée de compression longitudinale élastique entre la zone 82 de la dépression 26 et la zone 84 de la cavité 12. Ainsi considérées dans leur globalité, les zones 84 et 85 de la cavité 12 s'étendent du raccordement de celle-ci avec la face périphérique intérieure 7 du trou borgne 6 jusqu'à un plan 88 perpendiculaire à l'axe 5 et incluant le point 87, et la zone 85 se raccorde à la zone 86 au niveau de ce plan 88.

On conçoit aisément que lorsque le cadenas est fermé, le joint 93 isole vis-à-vis de l'extérieur les trous 42 de guidage des billes 45, qui pourraient constituer un accès pour l'humidité à l'intérieurdu trou borgne 36 et par conséquent au mécanisme se trouvant à l'intérieur de celui-ci, alors que le bouchon 63 interdit un tel accès par le trou 49 si bien que, compte tenu de l'étanchéité intrinsèque des pièces 17 et 18 et de leur liaison étanche par l'intermédiaire du joint 19, le trou borgne 36 et le mécanisme qu'il contient sont protégés de toute pénétration d'humidité, même en immersion.

Naturellement, le mode de réalisation du cadenas selon l'invention qui vient d'être décrit ne constitue qu'un exemple actuellement préféré, par rapport auquel un Homme du métier pourra prévoir de nombreuses variantes sans sortir pour autant du cadre de la présente invention.

## Revendications

1. Cadenas, du type comportant deux organes mutuellement indépendants, à raison :
- d'un organe femelle (2) présentant un axe longitudinal (5) et un trou borgne longitudinal (6) bordé d'un épaulement transversal (13), et
- d'un organe mâle (1) présentant un axe longitudinal (5) et une tige longitudinale (20) bordée d'un épaulement transversal (28), la tige (20) étant susceptible de pénétrer coaxialement dans le trou borgne (6) jusqu'à une position déterminée dans laquelle les épaulements (13, 28) se font face mutuellement en étant mutuellement écartés longitudinalement pour définir entre eux un espace (29), autour de la tige (20), ou de se dégager du trou borgne (6),
lesdits organes mâle et femelle (1, 2) présentant des moyens (16, 45, 46, 55) de verrouillage, à volonté, de la tige (20) dans l'évidement lorsque la tige (20) occupe ladite position, à raison d'au moins une saillie transversale, escamotable (45) portée par un premier (1) desdits organes (1, 2) et d'au moins une gorge transversale (16) aménagée dans le second (2) desdits organes (1,2), dans des positions respectives situées à l'intérieur du trou borgne (6) lorsque la tige (20) occupe ladite position et telles que la saillie (45) puisse alors pénétrer dans la gorge (16) pour verrouiller la tige (20) dans le trou borgne (6), le premier organe (1) logeant un mécanisme (46, 55) d'escamotage de ladite saillie (45) à volonté, présentant une serrure (55) accessible lorsque la tige (20) occupe ladite position,
caractérisé en ce que la tige (20) et le trou borgne (6) présentent un filetage longitudinal, coaxial, respectif (10, 23), les filetages (10, 23) étant mutuellement complémentaires et en prise mutuelle lorsque la tige (20) occupe ladite position et des positions longitudinalement proches de celle-ci, ainsi qu'une portée annulaire, transversale respective (82, 84) d'étanchéité, de révolution autour de l'axe longitudinal respectif (5), pour un joint annulaire d'étanchéité (93), élastiquement compressible au moins longitudinalement, les portées d'étanchéité (82, 24) occupant des positions respectives situées du même côté de la saillie (45) et de la gorge (16) que les épaulements (13, 28) lorsque la tige (20) occupe ladite position et telles que les portées d'étanchéité (82, 84) se fassent alors face mutuellement en étant mutuellement espacées longitudinalement d'une distance telle que le joint (93) soit élastiquement comprimé longitudinalement entre elles, en ce que sont prévus des moyens amovibles (62) d'obturation étanche de la serrure (55) et en ce que les organes mâle et femelle (1, 2) enferment par ailleurs de façon étanche le mécanisme d'escamotage (46, 55) y compris la serrure (55).

2. Cadenas selon la revendication 1, caractérisé en ce que la portée d'étanchéité (84) de l'organe femelle (2) est située entre l'épaulement (13) de l'organe femelle (2), d'une part, la saillie (45) et la gorge (16), d'autre part, lorsque la tige (20) occupe ladite position.

3. Cadenas selon la revendication 2, caractérisé en ce que l'organe femelle (2) présente une cavité (12) transversale annulaire de révolution autour de l'axe longitudinal respectif (5), ouverte en sens centripète et raccordant la portée d'étanchéité correspondante (84) à l'épaulement correspondant (13), pour offrir un appui centrifuge au joint annulaire (93) lorsque la tige (20) occupe ladite position.

4. Cadenas selon l'une quelconque des revendications 2 et 3, caractérisé en ce que la portée d'étanchéité (82) de l'organe mâle (1) coïncide sensiblement avec l'épaulement (13) de l'organe femelle (2) lorsque la tige (20) occupe ladite position.

5. Cadenas selon l'une quelconque des revendications 1 à 4, caractérisé en ce que la tige (20) présente une dépression transversale annulaire (26), de révolution autour de l'axe respectif (5), ouverte en sens centrifuge et située à proximité immédiate de la portée respective d'étanchéité (82), entre celle-ci, d'une part, la saillie (45) et la gorge (16), d'autre part, lorsque la tige (20) occupe ladite position, et en ce que le joint annulaire (93) est monté en précontrainte dans la dépression annulaire (26) de façon à être fixé sur la tige (20).

6. Cadenas selon l'une quelconque des revendications 1 à 5, caractérisé en ce que le trou borgne (6) et la tige (20) présentent des faces respectivement périphérique intérieure (7) et périphérique extérieure (2 5) cylindriques de révolution autour de l'axe longitudinal respectif (5), avec des diamètres respectifs sensiblement identiques pour établir un contact mutuel glissant de guidage à la rotation relative autour des axes longitudinaux (5) et de coulissement longitudinal relatif lorsque la tige (20) est engagée dans le trou borgne (6).

7. Cadenas selon l'une quelconque des revendications 1 à 6, caractérisé en ce que les filetages (10, 23) sont aménagés respectivement dans une zone (22) d'extrémité libre de la tige (20) et dans une zone (9) de fond du trou borgne (6), de dimensions transversales respectives comparativement réduites.

8. Cadenas selon l'une quelconque des revendications 1 à 7, caractérisé en ce qu'il comporte des moyens (8,11,21,24) de butée longitudinale mutuelle des organes mâle (1) et femelle (2) lorsque la tige (20) occupe ladite position.

9. Cadenas selon l'une quelconque des revendications 1 à 8, caractérisé en ce que les moyens amovibles (62) d'obturation étanche comportent un bouchon étanche (63) fixé de façon amovible, par complémentarité de formes ou conjugaison de forces, sur le premier organe (1) dans une position dans laquelle le bouchon (63) présente autour de la serrure (55) un contact d'étanchéité avec le premier organe (1).

10. Cadenas selon l'une quelconque des revendications 1 à 9, caractérisé en ce que le premier organe (1) est l'organe mâle (1) et le deuxième organe (2) l'organe femelle (2).
